# EUROPEAN PATENT APPLICATION

(11) **EP 3 244 403 A1**
(43) Date of publication of application: **15.11.2017**
(21) Application number: 17167922.8
(22) Date of filing: 25.04.2017
(51) Int. Cl.: G10L 15/22, G06F 17/27

(54) **DIALOGUE PROCESSING PROGRAM, DIALOGUE PROCESSING METHOD, AND INFORMATION PROCESSING DEVICE**

(30) Priority: 09.05.2016 JP 2016093921
(71) Applicant: Fujitsu Limited, Kawasaki-shi, Kanagawa 211-8588 (JP)
(72) Inventor: Takahashi, Tetsuro, Kanagawa 211-8588 (JP)
(74) Representative: Hoffmann Eitle

(57) **Abstract**

a smartphone (10) that stores therein a plurality of certainty factors corresponding to a combination of words included in a speech and words included in a response speech responded to the speech. The smartphone (10) detects a user speech indicating a speech of a user, and acquires a plurality of response candidates corresponding to the user response speech indicating the response speech with respect to the user speech from a plurality of different dialogue functions. The smartphone (10) extracts a plurality of combinations of the words included in the user speech and the words included in the plurality of response candidates. The smartphone (10) selects and outputs a user response speech from the response candidates based on the certainty factors associated with the extracted combinations.

## Description

### FIELD

The embodiments discussed herein are related to a dialogue processing program, a dialogue processing method, and an information processing device.

### BACKGROUND

As an interface of a computer system, a button or a command has been generally used. However, in recent years, information input to a computer system and information presentation from the computer system have been performed by a dialogue system using, for example, a language used on a day-to-day basis.

For example, there has been known a technique including a plurality of dialogue systems having functions of voice recognition, language comprehension, and dialogue scenarios, switching the dialogue system depending on a voice input from a user, and engaging in a dialogue with the user by using a switched dialogue system. Further, there has been known a technique of managing dialogue scenarios in association with user's preference and engaging in a dialogue with the user by using a dialogue scenario corresponding to the user.

However, according to the above techniques, dialogue pairs predicted in advance are held, and a response corresponding to a user speech is searched from the dialogue pairs to give a response, and therefore it is difficult to make a speech in consideration of information on the context in the dialogue and information of a dialogue counterpart, thereby making the dialogue unnatural.

For example, according to the techniques described above, dialogue pairs such as "hello, hello" and "I am tired, you have been through a lot" are prepared as "speech, response", and thus a response can be given only within the range of the dialogue pairs. Therefore, a predetermined response is given irrespective of the situation or the like, and the dialogue may become unnatural. It is also difficult to give a response with respect to a speech that is not registered in the dialogue pairs.

Accordingly, it is an object in one aspect of an embodiment of the invention to provide a dialogue processing program, a dialogue processing method, and an information processing device that can have a natural dialogue.

### BRIEF DESCRIPTION OF DRAWINGS

FIG. 1 is an explanatory diagram of a dialogue system according to a first embodiment;
FIG. 2 is a functional block diagram illustrating a functional configuration of a smartphone according to the first embodiment;
FIG. 3 is a diagram illustrating an example of information to be stored in a speech history DB;
FIG. 4 is a diagram illustrating an example of information to be stored in an end expression DB;
FIG. 5 is a diagram illustrating an example of information to be stored in a control expression DB;
FIG. 6 is a diagram illustrating an example of information to be stored in a user model DB;
FIG. 7 is an explanatory diagram of learning processing;
FIG. 8 is an explanatory diagram of speech selection;
FIG. 9 is a flowchart illustrating an overall flow of dialogue processing;
FIG. 10 is a flowchart illustrating a flow of the learning processing;
FIG. 11 is a flowchart illustrating a flow of speech-candidate acquisition processing;
FIG. 12 is a flowchart illustrating a flow of speech selection processing;
FIG. 13 is an explanatory diagram of a specific example of a response before learning;
FIG. 14 is an explanatory diagram of specific examples of selection and learning of a dialogue function;
FIG. 15 is an explanatory diagram of a first specific example of a speech and learning in the same dialogue function;
FIG. 16 is an explanatory diagram of a second specific example of the speech and learning in the same dialogue function; and
FIG. 17 is an explanatory diagram of a hardware configuration example.

### DESCRIPTION OF EMBODIMENTS

Preferred embodiments of the present invention will be explained with reference to accompanying drawings.

The present invention is not limited to the embodiments.

### [a] First Embodiment

### Description of dialogue system

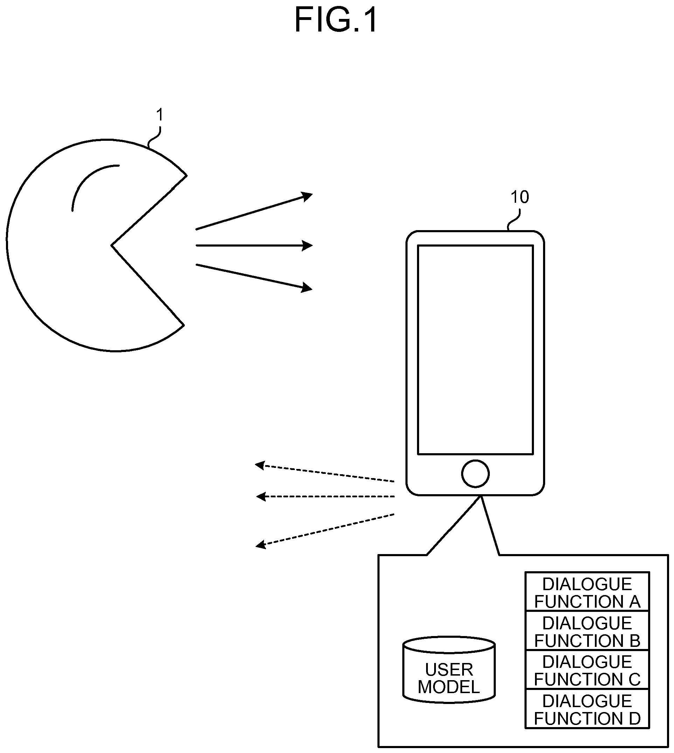

FIG. 1 is an explanatory diagram of a dialogue system according to a first embodiment. In the present embodiment, a smartphone 10 is described as an example. However, the present invention is not limited to a smartphone, and is similarly applicable to a personal computer, a laptop personal computer, a mobile terminal such as a mobile phone, and a computer device such as a server.

As illustrated in FIG. 1, the smartphone 10 has a plurality of dialogue systems of a dialogue function A, a dialogue function B, a dialogue function C, and a dialogue function D. Examples of the dialogue functions are described later. For example, various known dialogue applications such as a function of responding fixed expressions and a function of responding greetings can be adopted. In this example, four dialogue functions have been illustrated; however, the dialogue functions are not limited thereto, and an arbitrary number of functions can be adopted.

The smartphone 10 holds user models that presume user's interests from the dialogue to accumulate pieces of information, through the dialogues with a human, that is, a user. The user model is not limited to a model that performs learning from a dialogue with one user, and includes a model that performs learning from dialogues with a plurality of users, that is, humans.

When detecting a speech of a user 1 by a microphone or the like, the smartphone 10 inputs the contents of the detected speech to each of the dialogue functions A to D. The smartphone 10 then extracts each of a response candidate A from the dialogue function A, a response candidate B from the dialogue function B, a response candidate C from the dialogue function C, and a response candidate D from the dialogue function D. For example, each dialogue function performs a process of extracting a response candidate with respect to the input user speech, narrows down the response candidates, and extracts a speech candidate having the highest certainty factor with the certainty factor. In the present embodiment, the user speech may be described as "user speech", and the certainty factor may be described as "score".

The smartphone 10 calculates the certainty factor of each response candidate by using the user model. Thereafter, the smartphone 10 selects a response candidate having a calculated highest certainty factor among the response candidates A to D, and gives a response of the response candidate to the user 1 as a system speech.

In this manner, the smartphone 10 estimates dialogue continuity, dialogue repeatability, and end control of a dialogue based on the past speech history with the user and the speech of the user 1, updates the respective certainty factors of the respective response candidates output from the respective dialogue functions, and narrows down the response candidates to give a response. As a result, the smartphone 10 can make a speech in consideration of the information on the context in the dialogue and information of a dialogue counterpart, thereby enabling to have a natural dialogue.

### Functional configuration

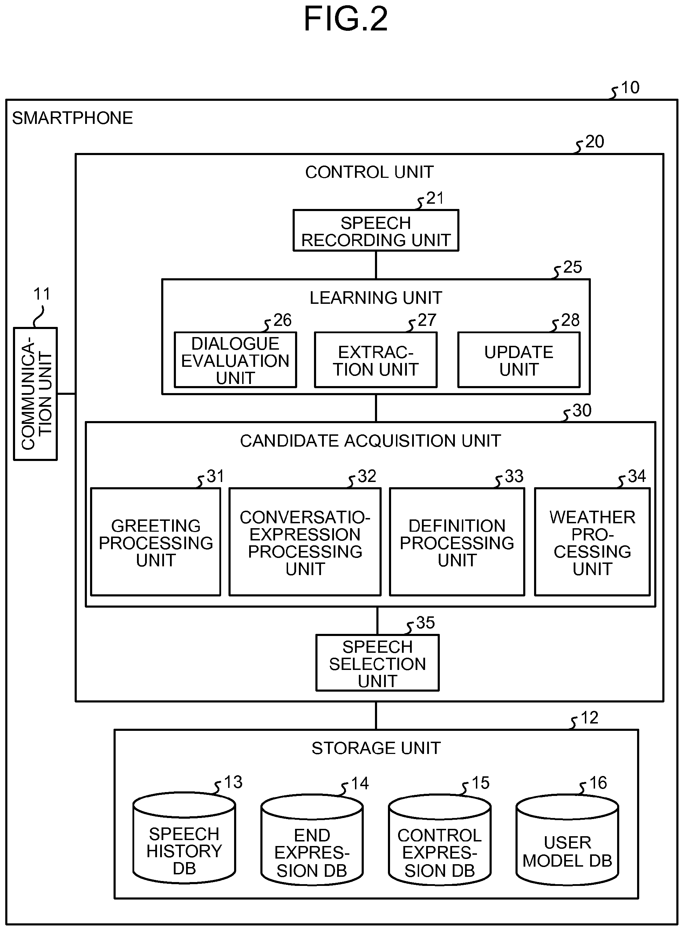

FIG. 2 is a functional block diagram illustrating a functional configuration of the smartphone 10 according to the first embodiment. As illustrated in FIG. 2, the smartphone 10 includes a communication unit 11, a storage unit 12, and a control unit 20. The communication unit 11 is a processing unit that performs transmission and reception of data by controlling communication with other devices, and is a wireless interface, for example.

The storage unit 12 is an example of a storage device that stores therein a program executed by the control unit 20 and various types of data, and is a memory or a hard disk, for example. The storage unit 12 stores therein a speech history DB 13, an end expression DB 14, a control expression DB 15, and a user model DB 16.

The speech history DB 13 is a database that stores therein a speech history between the user 1 and the smartphone 10. Specifically, the speech history DB 13 stores therein a speech of a user detected by the smartphone 10 and a response of the smartphone 10 with respect to the speech.

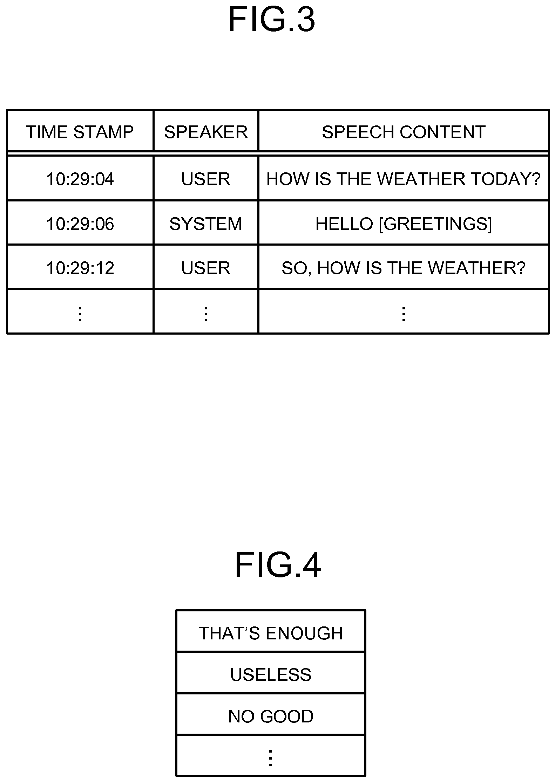

FIG. 3 is a diagram illustrating an example of information to be stored in the speech history DB 13. As illustrated in FIG. 3, the speech history DB 13 stores therein "time stamp", "speaker", and "speech content" in association with each other. The "time stamp" stored here is a time when the speech is made. The "speaker" is a person or the smartphone 10 which has made the speech, and in the case of the speech by a person, the "user" is stored, and in the case of the speech by the smartphone 10, the "system" is stored. In the "speech content", the contents of the detected speech are stored, and in the case of the speech by the user, the detected speech content is directly stored. In the case of the speech by the system, the speech content and the dialogue function that has extracted the speech content are associated with each other and stored.

In the example in FIG. 3, it is represented that "How is the weather today?" is output by the "user" at "10:29:04", and "Hello" is output by the "system" at "10:29:06" by using the dialogue function of "greetings", that is, the dialogue application.

The end expression DB 14 is a database that stores therein the contents of a speech indicating the end of a dialogue. Specifically, the end expression DB 14 stores therein contents of speeches presumed to be used for the user to finish a dialogue with the system forcibly.

FIG. 4 is a diagram illustrating an example of information to be stored in the end expression DB 14. As illustrated in FIG. 4, the end expression DB 14 stores therein "That's enough", "Useless", "No good", and the like. That is, when detecting a speech such as "That's enough", "Useless", or "No good", the smartphone 10 determines that the user forcibly finishes the dialogue and there is a high possibility that the dialogue has not continued naturally.

The control expression DB 15 is a database that stores therein the contents of a speech that controls a dialogue. Specifically, the control expression DB 15 stores therein the contents of speeches anticipated that the user is executing some control against the dialogue flow.

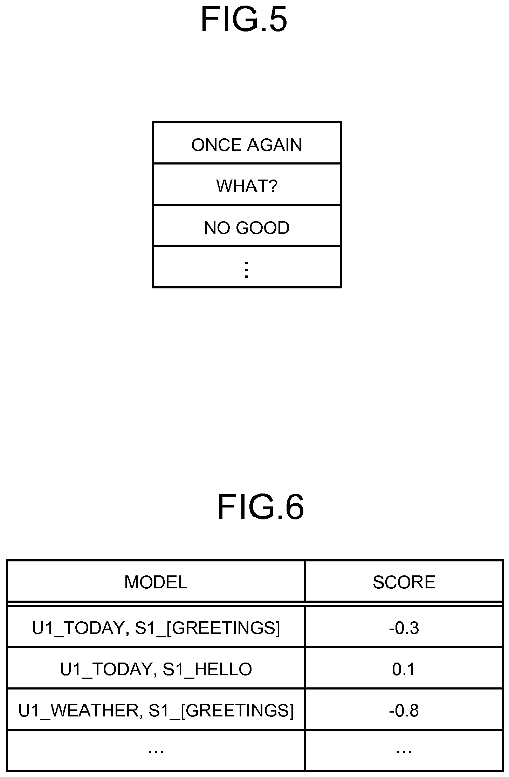

FIG. 5 is a diagram illustrating an example of information to be stored in the control expression DB 15. As illustrated in FIG. 5, the control expression DB 15 stores therein "Once again", "What?", "No good", and the like. That is, when detecting the speech such as "Once again", "What?", or "No good", the smartphone 10 determines that there is a high possibility that the user wishes to execute control to repeat the same question or control to listen to the speech of the system again, irrespective of the flow of the dialogue.

The user model DB 16 is a database that accumulates pieces of information by presuming user's interests from a dialogue, through a dialogue with a human, that is, with the user 1. Specifically, the user model DB 16 learns and stores therein the dialogue contents anticipated that the human desires, and a score of the dialogue contents, based on a speech history of the dialogue that the smartphone 10 has had before with each user. The pieces of information stored here are updated by a learning unit 25 described later.

FIG. 6 is a diagram illustrating an example of information to be stored in the user model DB 16. As illustrated in FIG. 6, the user model DB 16 stores therein "model" and "score" in association with each other. The "model" stored here includes pieces of information specifying the user speech, the system speech, dialogue contents between the user and the system. The "score" is information indicating the accuracy, the certainty factor, and the reliability of the model, and is presumed that as the figure increases, there is a higher possibility of establishment of a dialogue.

In the example in FIG. 6, the user model DB 16 indicates an example in which a score of a model "U1_today, S1_[greetings]" is stored as "-0.3", and a score of a model "U1_today, S1_[Hello]" is stored as "0.1". As the model, information is stored in a format of "speaker + speech order_speech content" or "speaker + speech order_[dialogue function]". For example, the first line in FIG. 6 indicates that the score of a combination of a word "today" included in the first speech content by the user and the dialogue function "greetings" used for the first speech by the system is "0.3". The second line in FIG. 6 indicates that the score of a combination of a word "today" included in the first speech content by the user and a word "hello" included in the first speech content by the system is "0.1".

The control unit 20 is a processing unit that manages the entire processing of the smartphone 10, and is a processor, for example. The control unit 20 includes a speech recording unit 21, the learning unit 25, a candidate acquisition unit 30, and a speech selection unit 35. The speech recording unit 21, the learning unit 25, the candidate acquisition unit 30, and the speech selection unit 35 are an example of an electronic circuit provided in the processor, and an example of a process performed by the processor.

The speech recording unit 21 is a processing unit that stores a speech in the speech history DB 13, when detecting user speech or a speech by the smartphone 10. For example, when detecting a speech of "how are you" at "10:12:10" via a sound collecting unit such as a microphone (not illustrated), the speech recording unit 21 stores "the time stamp = 10:12:10, the speaker = user, and the speech content = how are you" in the speech history DB 13. Further, when the smartphone 10 makes a speech of "yes" at "10:12:15" by using the dialogue function "greetings", the speech recording unit 21 stores "the time stamp = 10:12:15, the speaker = system, and the speech content = yes [greetings]" in the speech history DB 13. The speech recording unit 21 is an example of a detection unit.

The learning unit 25 is a processing unit that includes a dialogue evaluation unit 26, an extraction unit 27, and an update unit 28, and performs learning of the user model DB 16 based on the history of dialogues between a user and a system. Specifically, when the speech content of the user is registered in the speech history DB 13, the learning unit 25 reads a preset number of speeches from the speech history DB 13, and performs learning of the user model DB 16 by presuming user's interests and the like based on a combination of words included in the read speeches. The learning unit 25 is an example of an extraction unit.

The dialogue evaluation unit 26 is a processing unit that evaluates a dialogue from a viewpoint of dialogue continuity, dialogue repeatability, and dialogue controllability. For example, the dialogue continuity is for determining whether the speech of the user and the speech of the system make sense and are continuing. The dialogue repeatability is for determining whether the same speech is repeated unnecessarily. The dialogue controllability is for determining whether the user is trying to forcibly bring a dialogue in a certain direction.

The dialogue evaluation unit 26 calculates an evaluation value relative to the latest user speech from the viewpoint of dialogue continuity, dialogue repeatability, and dialogue controllability, and outputs the evaluation value to the extraction unit 27 and the update unit 28.

### Determination of dialogue continuity

Specifically, the dialogue evaluation unit 26 reads the latest user speech detected by the speech recording unit 21 from the speech history DB 13 to determine whether the speech content has been registered in the end expression DB 14. If the word registered in the end expression DB 14 is included in the latest user speech, the dialogue evaluation unit 26 adds "-1" to the evaluation value. If the word registered in the end expression DB 14 is not included in the latest user speech, the dialogue evaluation unit 26 adds "1" to the evaluation value.

### Determination of dialogue repeatability

Specifically, the dialogue evaluation unit 26 reads the target latest user speech (u1) and a user speech (u2) one before from the speech history DB 13, to calculate a similarity (sim(u1, u2)). The dialogue evaluation unit 26 calculates "1-sim(u1, u2)x2" by using the similarity, and adds the calculated value to the evaluation value. The evaluation value "1-sim(u1, u2)x2" approaches "-1" as the similarity becomes higher.

For the similarity (sim(u1, u2)), various known methods can be adopted. For example, the similarity can be determined by using how often the same word is being used in u1 and u2.

### Determination of dialogue controllability

Specifically, the dialogue evaluation unit 26 reads the latest user speech detected by the speech recording unit 21 from the speech history DB 13 to determine whether the speech content has been registered in the control expression DB 15. If the word registered in the control expression DB 15 is included in the latest user speech, the dialogue evaluation unit 26 adds "-1" to the evaluation value. If the word registered in the control expression DB 15 is not included in the latest user speech, the dialogue evaluation unit 26 adds "1" to the evaluation value.

Referring back to FIG. 2, the extraction unit 27 is a processing unit that extracts dialogue topics including topics such as a place and date and time appearing in a user speech, the dialogue function used for a system speech, and topics appearing in a speech from the dialogue history. Specifically, the extraction unit 27 reads dialogues including the user speech and the system speech corresponding to a preset number of speeches from the speech history DB 13. Subsequently, the extraction unit 27 extracts words by morphological analysis or the like, for each speech. The extraction unit 27 then encodes the extracted respective words so as to be able to specify whether the respective words are extracted from the user speech or from the system speech, and to be in the same format as the model stored in the user model DB 16, and outputs the encoded information to the update unit 28.

The update unit 28 is a processing unit that updates the score value of each model stored in the user model DB 16, by using the respective pieces of encoded information extracted by the extraction unit 27 and the evaluation value calculated by the dialogue evaluation unit 26. Specifically, the update unit 28 extracts an element from the respective pieces of encoded information and searches the user model DB 16 for the same model as the relevant element. The update unit 28 adds the evaluation value calculated by the dialogue evaluation unit 26 to the score of the relevant model. In this manner, the model in the user model DB 16 is updated.

### Learning processing

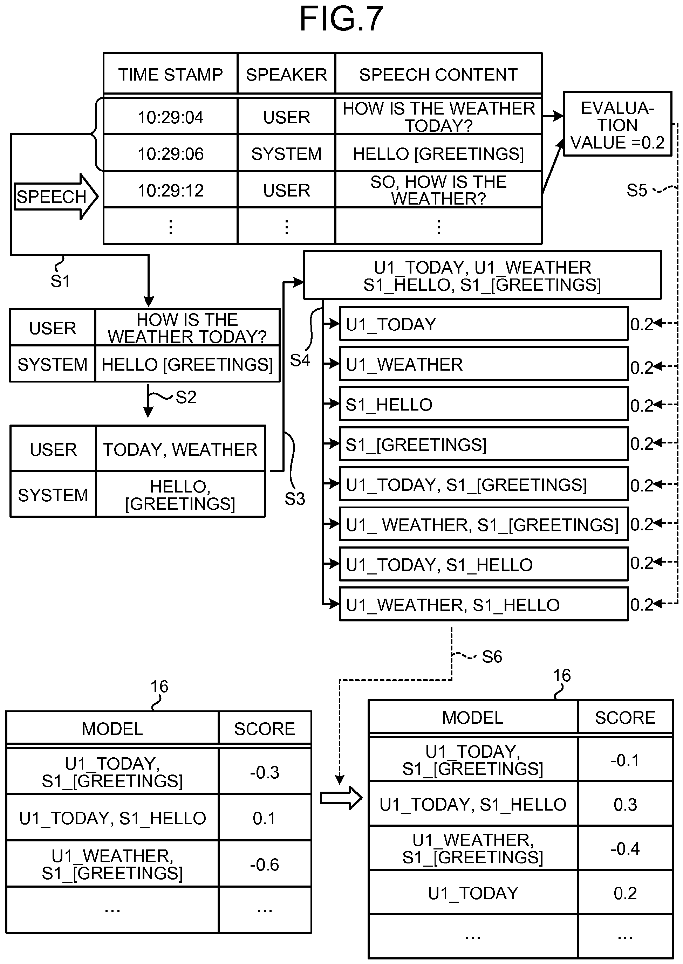

Learning processing is described here in detail. FIG. 7 is an explanatory diagram of the learning processing. As illustrated in FIG. 7, it is assumed that a user speech "So, how is the weather?" is newly registered in the speech history DB 13 at "10:29:12", in a state in which the user speech and the system speech have been registered in the speech history DB 13. It is assumed that the dialogue evaluation unit 26 calculates "0.2" as the evaluation value with respect to the speech.

In this state, the extraction unit 27 reads speeches corresponding to past two dialogues specified in advance "10:29:06, system, hello [greetings]" and "10:29:04, user, how is the weather today?" (S1). Subsequently, the extraction unit 27 extracts "today" and "weather" as the words from the speech content "how is the weather today?" in the read user speech, and similarly extracts the word "hello" from the speech content "hello" in the system speech and the used dialogue function "[greetings]" (S2).

The extraction unit 27 then encodes the words "today, weather" in the user speech and the word "hello, [greetings]" in the system speech (S3). Specifically, the extraction unit 27 combines the information indicating the speaker, the speech order, and the words to generate "U1_today, U1_weather, S1_hello, and S1_[greetings]". "U" indicates the user speech, "S" indicates the system speech, and "1" indicates the speech order. "1" is set to the dialogue one before the latest user speech (user speech and system speech), and "2" is set to the dialogue two before (user speech and system speech).

Subsequently, the extraction unit 27 generates a combination of the respective encoded codes and extracts elements (S4), and associates the elements with the evaluation value "0.2" calculated by the dialogue evaluation unit 26 (S5). Specifically, the extraction unit 27 generates an element "U1_today", an element "U1_weather", an element "S1_hello", an element "S1_[greetings]", an element "U1_today, S1_[greetings]", an element "U1_weather, S1_[greetings]", an element "U1_today, S1_hello", and an element "U1_weather, S1_hello" from the code "U1_today, U1_weather, S1_hello, S1_[greetings]". The extraction unit 27 adds the evaluation value "0.2" to the generated respective elements. The combination method can be arbitrarily set such as using only the combination of U1 and S1, or including all the combinations.

Thereafter, the update unit 28 updates the user model DB 16 based on the respective elements generated by the extraction unit 27 and the evaluation value (S6). For example, because the extracted element "U1_today, S1_[greetings]" has been stored in the user model DB 16, the update unit 28 adds the evaluation value "0.2" to the score "-0.3" to be stored to update the score to a new score "-0.1". Further, because the extracted element "U1_today" has not been stored in the user model DB 16, the update unit 28 stores a record including the model "U1_today" and the evaluation value "0.2" in the user model DB 16.

In this manner, every time the learning unit 25 detects the user speech, the learning unit 25 updates the score of the relevant model by performing calculation of the evaluation value, extraction of a dialogue topic, and extraction of elements.

Referring back to FIG. 2, the candidate acquisition unit 30 is a processing unit that acquires a plurality of speech candidates by respectively using a plurality of dialogue functions such as a greeting processing unit 31, a conversation-expression processing unit 32, a definition processing unit 33, and a weather processing unit 34. Specifically, the candidate acquisition unit 30 inputs the user speech to the respective dialogue functions to acquire speech candidates from the respective dialogue functions, and outputs the speech candidates to the speech selection unit 35. The candidate acquisition unit 30 is an example of an acquisition unit.

The dialogue functions such as the greeting processing unit 31, the conversation-expression processing unit 32, the definition processing unit 33, and the weather processing unit 34 illustrated in FIG. 2 corresponds to a general dialogue application. Therefore, the dialogue functions are not limited to the functions and the number illustrated in FIG. 2, and other arbitrary functions and an arbitrary number of functions can be adopted.

For example, the greeting processing unit 31 corresponds to a dialogue application that gives a response to the greetings. As an example, the greeting processing unit 31 stores therein "good morning, good morning, 1.0", "good morning, hello, -0.7", and the like as "input speech, response speech, score value" in association with each other. The greeting processing unit 31 searches for the latest user speech detected by the speech recording unit 21 as an input speech, and selects the corresponding "response speech, score value" as the speech candidate.

The conversation-expression processing unit 32 associates a conversation assumed to be established with a dialogue application to give a response. As an example, the conversation-expression processing unit 32 stores therein "The weather is fine, isn't it?, Yes, 0.2", "The weather is fine, isn't it?, Is it?, -0.2", and the like as the "input speech, response speech, score value" in association with each other. The conversation-expression processing unit 32 searches for the latest user speech detected by the speech recording unit 21 as an input speech, and selects the corresponding "response speech, score value" as the speech candidate.

The definition processing unit 33 corresponds to a dialogue application that responds a definition. As an example, the definition processing unit 33 stores therein "how is the weather?, the weather is ... in a certain place, -0.7" and the like as the "input speech, response speech, score value" in association with each other. The definition processing unit 33 searches for the latest user speech detected by the speech recording unit 21 as an input speech, and selects the corresponding "response speech, score value" as the speech candidate.

The weather processing unit 34 corresponds to a dialogue application that acquires and responds weather information in the present location from an external server. As an example, upon reception of the latest user speech detected by the speech recording unit 21, the weather processing unit 34 specifies the position at which the user speech has been received by a GPS (Global Positioning System) or the like. The weather processing unit 34 acquires the weather at the specified position from the external server, and selects the acquired weather information as the speech candidate.

The speech selection unit 35 is a processing unit that evaluates the respective speech candidates acquired by the candidate acquisition unit 30 by the score value stored in the user model DB 16, and selects the speech candidate having the highest evaluation value to respond to the user 1. The speech selection unit 35 is an example of an output unit.

Specifically, the speech selection unit 35 extracts a dialogue topic and an element, which are the same processing as the learning unit 25, for each speech candidate. The speech selection unit 35 specifies the score corresponding to each of the plurality of elements extracted for each speech candidate from the user model DB 16 to calculate a total value of the scores. Thereafter, the speech selection unit 35 selects and responds the speech candidate having the highest total value of the element scores, and registers the selected speech candidate in the speech history DB 13 as the system speech.

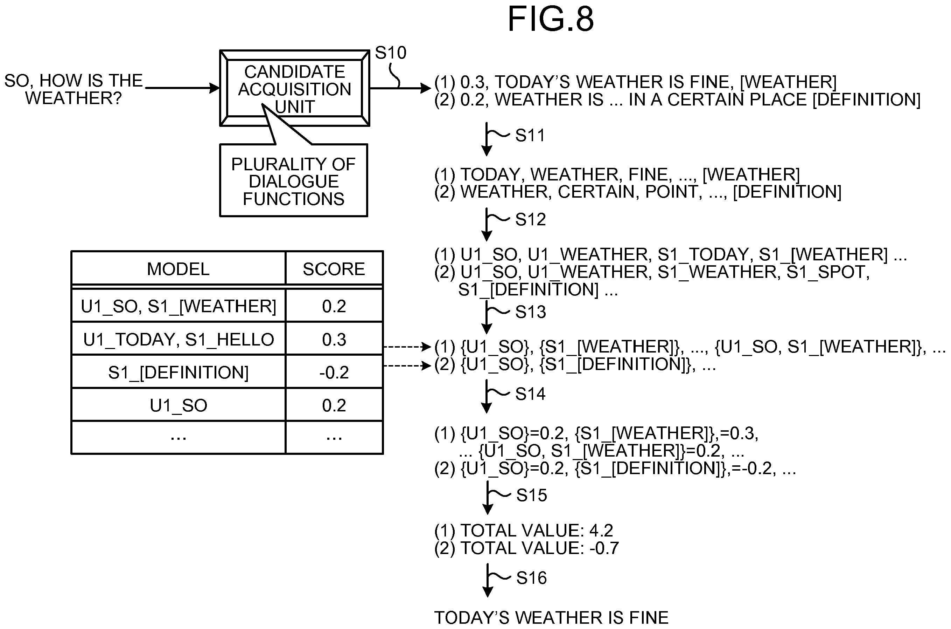

Speech selection is described here in detail. FIG. 8 is an explanatory diagram of speech selection. An example in which two dialogue functions of the definition processing unit 33 and the weather processing unit 34 are provided as the dialogue functions is described here.

As illustrated in FIG. 8, when the user speech "so, how is the weather?" detected by the speech recording unit 21 is input, the candidate acquisition unit 30 acquires (1) "0.3, today's weather is fine" from the weather processing unit 34 as the "score, speech candidate", and acquires (2) "0.2, weather is ... in a certain place" from the definition processing unit 33 (S10).

Subsequently, the speech selection unit 35 performs morphological analysis with regard to (1) to extract words and the used dialogue function, extracts (1) "today, weather, fine, ..., [weather]" and extracts (2) "weather, certain, point, ..., [definition]" with regard to (2) (S11).

The speech selection unit 35 performs encoding described above with respect to each of the pair of the user speech and (1) and the pair of the user speech and (2), to extract (1) "U1_so, U1_weather, S1_today, S1_[weather], ..." and (2) "U1_so, U1_weather, S1_[weather], S1_spot, S1_[definition], ..." (S12).

Next, the speech selection unit 35 extracts the elements described above regarding (1) and (2) (S13). For example, the speech selection unit 35 extracts (1) element "{U1_so}, {S1_[weather]}, ..., {U1_so, {S1_[weather]}, ..." regarding (1). Similarly, the speech selection unit 35 extracts (2) element "{U1_so}, {S1_[definition]}, ..." regarding (2).

Further, the speech selection unit 35 extracts scores of the respective elements by referring to the user model DB 16 regarding (1) and (2) (S14). For example, the speech selection unit 35 extracts a score "0.2" regarding the element (1) {U1_so}, a score "0.2" regarding the element {U1_so, S1_[weather]}, and the like. Similarly, the speech selection unit 35 extracts a score "0.2" regarding the element (2) {U1_so}, a score "-0.2" regarding the element {S1_[definition]}, and the like. Elements that have not been stored in the user model DB 16 can be scored as "0".

Thereafter, the speech selection unit 35 calculates a total value of the element scores regarding each of (1) and (2) (S15). For example, the speech selection unit 35 calculates "(score "0.2" of the element {U1_so}) + (score "0.3" of the element {S1_[weather]}) + (score "0.2" of the "element {U1_so, S1_[weather]}) + ...", to calculate a total value "4.2" regarding (1). Similarly, the speech selection unit 35 calculates "(score "0.2" of the element {U1_so}) + (score "-0.2" of the element {S1_[definition]}) + ..." to calculate a total value "-0.7" regarding (2).

As a result, the speech selection unit 35 selects "today's weather is fine" of (1) having the largest total value as a response, and gives a response to the user 1 (S16).

Other than the method of selecting a candidate having the largest total value, a method of selecting a candidate by means of probability distribution corresponding to the total value of the candidate can be adopted. By using this method, a re-learning chance of using a candidate output from a newly added dialogue function and a speech that has not been preferred before can be acquired, thereby enabling to prevent that the system response places a locally disproportionate emphasis.

### Processing flow

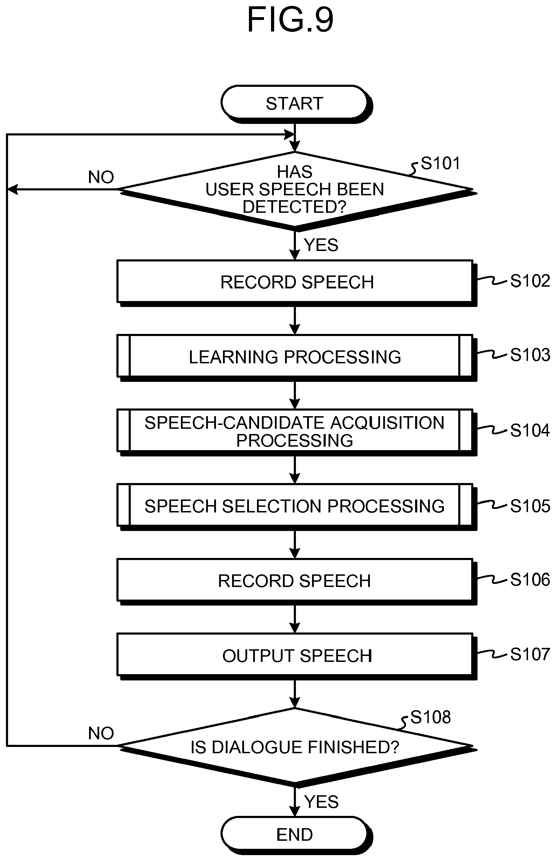

Dialogue processing performed by the smartphone 10 is described next with reference to FIG. 9 to FIG. 13. An overall flow of the dialogue processing, the learning processing, the acquisition processing of a speech candidate, and speech selection processing is described here.

### Overall processing flow

FIG. 9 is a flowchart illustrating an overall flow of the dialogue processing. As illustrated in FIG. 9, upon detection of a speech of the user 1 (YES at S101), the speech recording unit 21 of the smartphone 10 records the speech in the speech history DB 13 (S102).

Subsequently, the learning unit 25 performs the learning processing of learning the user model DB 16 (S103). The candidate acquisition unit 30 performs the speech-candidate acquisition processing of acquiring a speech candidate from each dialogue function (S104). The speech selection unit 35 performs speech selection processing of selecting one speech from a plurality of speech candidates (S105).

Thereafter, the speech selection unit 35 records the selected speech candidate in the speech history DB 13 as a speech (S106), and gives a response to the user 1 (S107). When the dialogue is to be continued without accepting any process of finishing the dialogue or the like (NO at S108), the processes at S101 and thereafter are repeated. When the dialogue is to be finished (YES at S108), the process is finished.

### Flow of learning processing

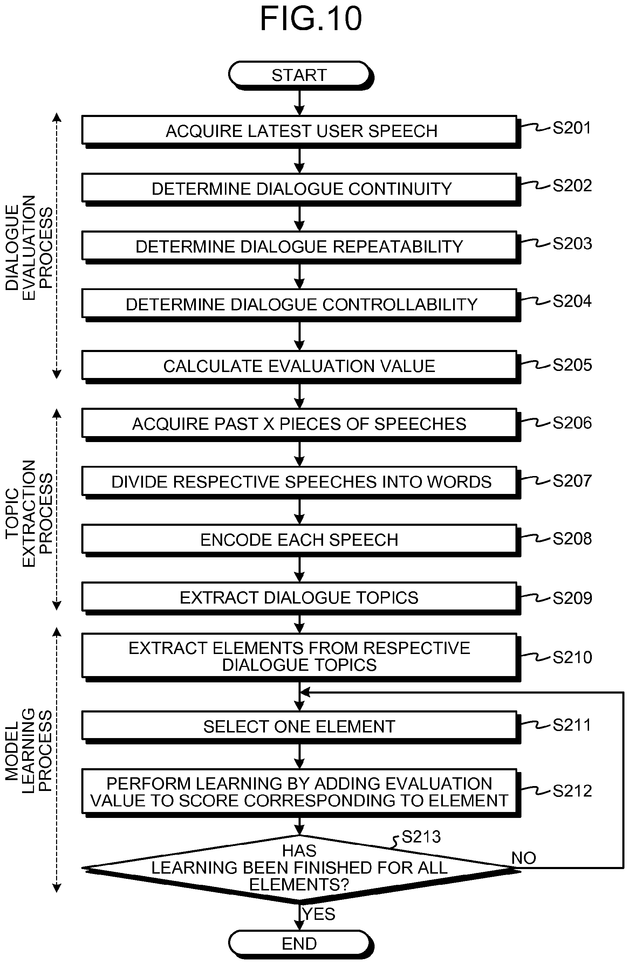

FIG. 10 is a flowchart illustrating a flow of the learning processing. The learning processing illustrated in FIG. 10 includes a dialogue evaluation process (S201 to S205), a topic extraction process (S206 to S209), and a model learning process (S210 to S213).

Specifically, as illustrated in FIG. 10, upon acquisition of the latest user speech (S201), the dialogue evaluation unit 26 determines dialogue continuity (S202), and determines repeatability of the dialogue (S203). The dialogue evaluation unit 26 then determines the dialogue controllability (S204), and calculates an evaluation value of the latest user speech (S205). The respective determinations are in no particular order.

Subsequently, the extraction unit 27 acquires past X pieces of speeches from the speech history DB 13 (S206), divides the respective speeches into words (S207), encodes the respective speeches (S208), and extracts a dialogue topic (S209). The past X pieces can be set arbitrarily. However, it is preferable that the past X pieces are at least two in view of the intention of extracting the dialogue between the user and the system.

Thereafter, the update unit 28 extracts elements from the respective dialogue topics (S210). For example, the update unit 28 extracts elements from information acquired from the respective speeches and encoded. The update unit 28 selects one element (S211), and adds the evaluation value calculated at S205 to the score corresponding to the element in the user model DB 16, to perform learning (S212). The update unit 28 performs the process from S210 to S212 with respect to all the speeches extracted at S206. The update unit 28 repeats the processes at S211 and thereafter until the learning has finished for all the elements (NO at S213). Upon completion of learning for all the elements (YES at S213), the update unit 28 finishes the process.

### Flow of speech-candidate acquisition processing

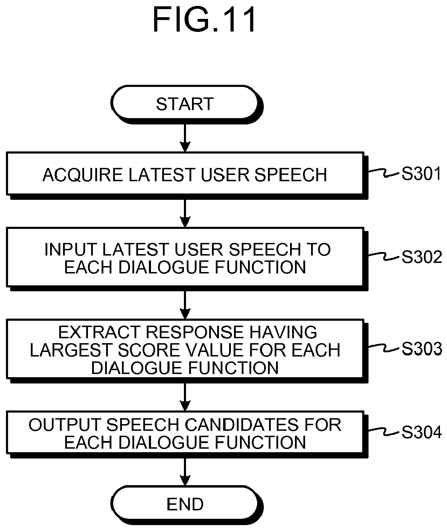

FIG. 11 is a flowchart illustrating a flow of the speech-candidate acquisition processing. As illustrated in FIG. 11, when having acquired the latest user speech (S301), the candidate acquisition unit 30 inputs the latest user speech to each dialogue function (S302).

The candidate acquisition unit 30 extracts a response having the largest score value for each dialogue function (S303), and outputs a speech candidate in which the response and the score value are associated with each other for each dialogue function (S304).

### Flow of speech selection processing

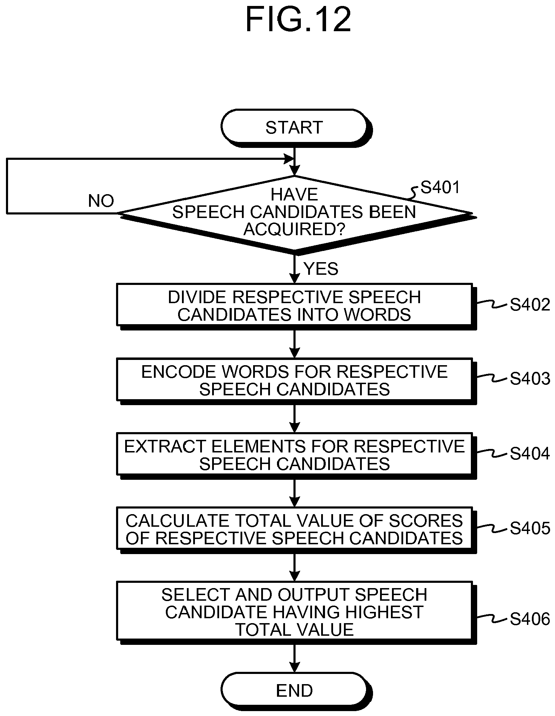

FIG. 12 is a flowchart illustrating a flow of the speech selection processing. As illustrated in FIG. 12, upon acquisition of the speech candidates (YES at S401), the speech selection unit 35 divides respective speech candidates into words (S402), and encodes the words for respective speech candidates to extract dialogue topics (S403).

Subsequently, the speech selection unit 35 extracts elements by using the dialogue topics of the respective speech candidates (S404), extracts scores of the elements from the user model DB 16 to calculate a total value of the scores of the elements for the respective speech candidates (S405). Thereafter, the speech selection unit 35 selects and outputs a speech candidate having the highest total value (S406).

### Specific processing image

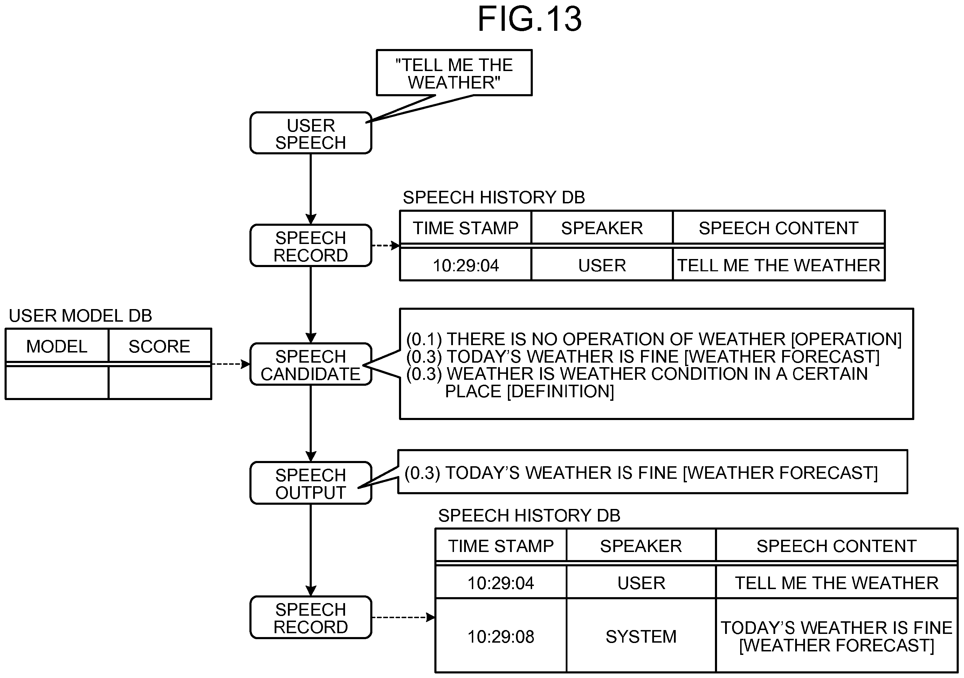

Specific processing images such as the learning processing are described with reference to FIG. 13 to FIG. 16.

### Dialogue image before learning

FIG. 13 is an explanatory diagram of a specific example of a response before learning. As illustrated in FIG. 13, upon detection of the user speech "tell me the weather", the smartphone 10 stores the speech content in the speech history DB 13. At this time, the smartphone 10 does not perform learning, because the system speech has not been recorded in the speech history DB 13.

The smartphone 10 inputs the user speech "tell me the weather" to each dialogue function to extract a speech candidate. As a result, the smartphone 10 extracts "0.1, there is no operation of weather, [operation]", "0.3, today's weather is fine, [weather forecast]", and "0.3, weather is the weather condition in a certain place, [definition]" as the "score, speech content, function name".

Because sufficient models have not been learned in the user model DB 16, the smartphone 10 selects a speech candidate having the highest score from the extracted three speech candidates. When there are a plurality of candidates having the highest score, the candidate is selected at random. As a result, the smartphone 10 outputs the speech candidate "today's weather is fine" selected at random as the system speech, and records the speech candidate in the speech history DB 13.

### Learning image by dialogue function

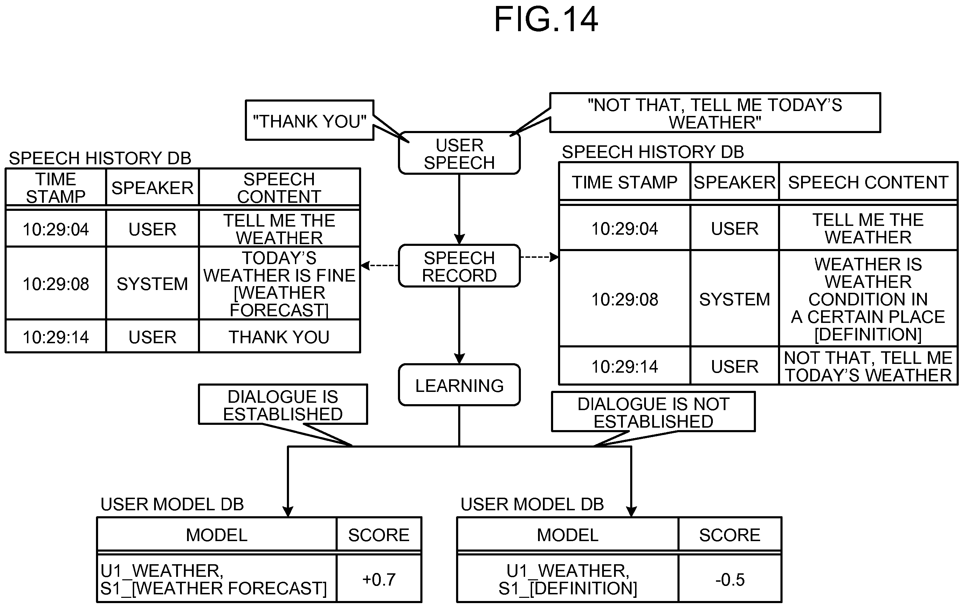

FIG. 14 is an explanatory diagram of specific examples of selection and learning of the dialogue function. In FIG. 14, an example in which the learning result is different depending on the selected dialogue function is described.

In FIG. 14, an example is illustrated in which "thank you" is detected as the user speech, in a state in which "10:29:04, user, tell me the weather" and "10:29:08, system, today's weather is fine, [weather forecast]" have been recorded in the speech history DB 13 as the "time stamp, speaker, speech content".

In this case, the smartphone 10 records the user speech "thank you" in the speech history DB 13, and performs the learning processing described above. The smartphone 10 detects as the dialogue (1) user speech "tell me the weather", (2) system speech "today's weather is fine", and (3) user speech "thank you", and learns that the dialogue has been established. As a result, the smartphone 10 learns that selection of the dialogue function [weather forecast] is correct, and updates the score of a model "U1_weather, S1_[weather forecast]" to be stored in the user model DB 16 to a high value.

In another example of FIG. 14, an example is illustrated in which a user speech "Not that, tell me today's weather" is detected in a state in which "10:29:04, user, tell me the weather" and "10:29:08, system, weather is the weather condition in a certain place, [definition]" have been recorded in the speech history DB 13 as the "time stamp, speaker, speech content".

In this case, the smartphone 10 records the user speech "Not that, tell me today's weather" in the speech history DB 13, and performs the learning processing described above. The smartphone 10 detects as the dialogue (1) user speech "tell me the weather", (2) system speech "weather is the weather condition in a certain place", and (3) user speech "Not that, tell me today's weather", and learns that the dialogue is not established. As a result, the smartphone 10 learns that selection of the dialogue function [definition] is not correct, and updates the score of a model "U1 weather, S1_[definition]" to be stored in the user model DB 16 to a low value.

In this manner, the smartphone 10 verifies the naturalness of the dialogue, and assesses the selection result of the dialogue function. In the case of the natural dialogue, the smartphone 10 updates the score of the used dialogue function to a higher value, and in the case of the unnatural dialogue, updates the score of the used dialogue function to a lower value.

### Learning image 1 by same dialogue function

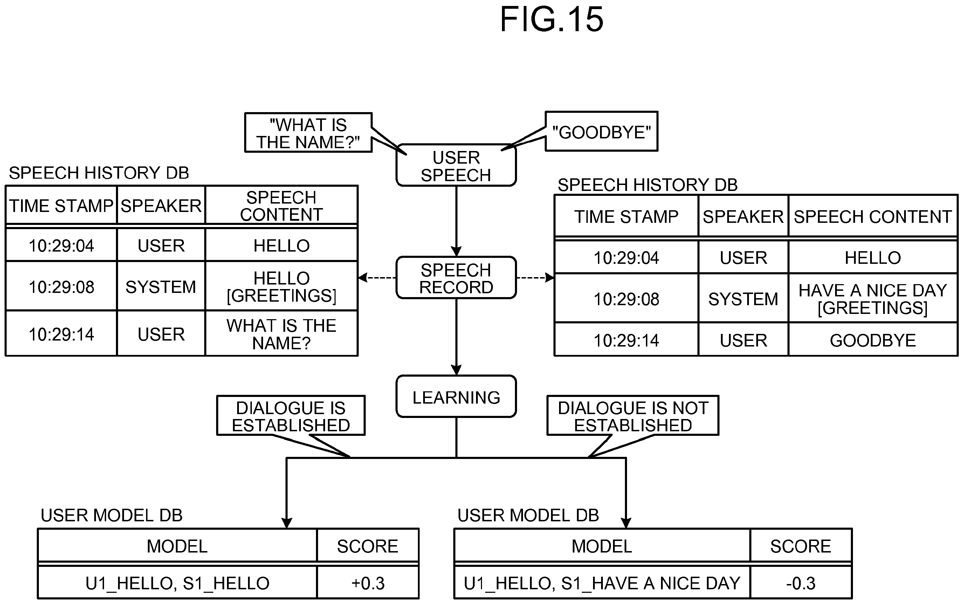

FIG. 15 is an explanatory diagram of a first specific example of the speech and learning in the same dialogue function. In FIG. 15, an example in which even if the same dialogue function is used, the learning result is different depending on the naturalness of the dialogue is described.

In FIG. 15, an example in which "what is the name?" has been detected as the user speech, in a state in which "10:29:04, user, hello" and "10:29:08, system, hello [greetings]" have been recorded in the speech history DB 13 as the "time stamp, speaker, speech content" is illustrated.

In this case, the smartphone 10 records the user speech "what is the name?" in the speech history DB 13 and performs the learning processing described above. The smartphone 10 detects as the dialogue (1) user speech "hello", (2) system speech "hello", and (3) user speech "what is the name?", and learns that the dialogue has been established. As a result, the smartphone 10 learns that selection of the speech content "hello" by the dialogue function [greetings] is correct, and updates the score of a model "U1_hello, S1_hello" to be stored in the user model DB 16 to a high value.

In another example of FIG. 15, an example is illustrated in which a user speech "goodbye" is detected in a state in which "10:29:04, user, hello" and "10:29:08, system, have a nice day [greetings]" have been recorded in the speech history DB 13 as the "time stamp, speaker, speech content".

In this case, the smartphone 10 records the user speech "goodbye" in the speech history DB 13 and performs the learning processing described above. The smartphone 10 detects as the dialogue (1) user speech "hello", (2) system speech "have a nice day", and (3) user speech "goodbye", and learns that the control expression is spoken and the dialogue has not been established. As a result, the smartphone 10 learns that selection of the speech content "have a nice day" by the dialogue function [greetings] is not correct, and updates the score of a model "U1_hello, S1_have a nice day" to be stored in the user model DB 16 to a low value.

As described above, even if the same dialogue function is used, the smartphone 10 verifies naturalness of the dialogue by the spoken contents. Accordingly, construction of the user model and learning can be performed, taking user's preference into consideration.

### Learning image 2 by same dialogue function

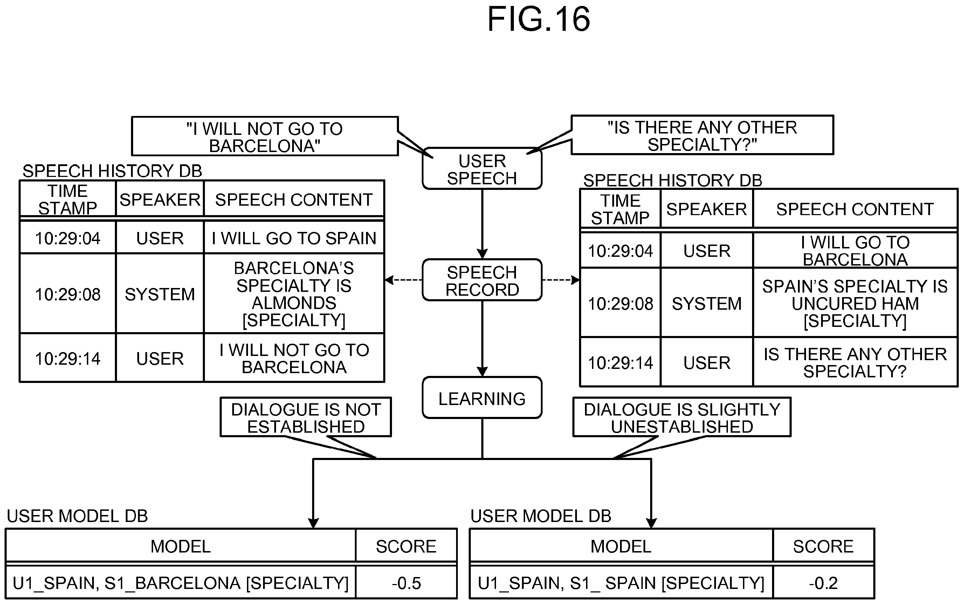

FIG. 16 is an explanatory diagram of a second specific example of the speech and learning in the same dialogue function. In FIG. 16, and an example in which even if the same dialogue function is used, learning based on the speech content is performed is described.

In the example in FIG. 16, "I will not go to Barcelona" is detected as the user speech in a state in which "10:29:04, user, I will go to Spain" and "10:29:08, system, Barcelona's specialty is almonds [specialty]" have been recorded in the speech history DB 13 as the time stamp, speaker, speech content". The "specialty" is an example of the dialogue application that responds specialty with respect to an input of geographical name.

In this case, the smartphone 10 records the user speech "I will not go to Barcelona" in the speech history DB 13, and performs the learning processing described above. The smartphone 10 assumes that a system speech quite different from user's intention has been made because the latest user speech is "I will not go to Barcelona". As a result, the smartphone 10 learns that the selection of the speech content "Barcelona's specialty is almonds" by the dialogue function [specialty] is not correct, and updates the score of a model "U1_Spain, S1_Barcelona [specialty]" to be stored in the user model DB 16 to a sufficiently low value.

In another example of FIG. 16, an example is illustrated in which "Is there any other specialty?" is detected as the user speech, in a state in which "10:29:04, user, I will go to Spain" and "10:29:08, system, Spain's specialty is uncured ham [specialty]" have been recorded in the speech history DB 13 as the "time stamp, speaker, speech content".

In this case, the smartphone 10 records the user speech "Is there any other specialty?" in the speech history DB 13, and performs the learning processing described above. The smartphone 10 assumes that a system speech is not much different from user's intention but is not a system speech that satisfies the user, because the latest user speech is "Is there any other specialty?". As a result, the smartphone 10 learns that there is a room for improvement in the selection of the speech content "Spain's specialty is uncured ham" by the dialogue function [specialty], and updates the score of a model "U1_Spain, S1_Spain [specialty]" to be stored in the user model DB 16 to a slightly low value.

As described above, the smartphone 10 determines the dialogue continuity by the spoken contents, even if the same dialogue function is used. Accordingly, construction of the user model and learning can be performed while taking user's preference into consideration.

### One aspect of effects

As described above, the smartphone 10 uses a plurality of dialogue functions simultaneously to generate a response candidate for all the dialogue functions. The smartphone 10 constructs a user model and continuously updates the user model, while the system is having a dialogue with the user. In this manner, the smartphone 10 first prepares speech candidates when the system makes a speech, and a user model among the speech candidates is used to generate a speech desired by the user.

Therefore, the smartphone 10 can use the information of "dialogue topics" and "user's preference" as the user model, to construct an estimation model that estimates "user's preference" from "dialogue topics" by a machine learning method. Further, the smartphone 10 can learn both a model common to all users and a model specific to an individual user.

As a result, the smartphone 10 can respond a system speech in a dialogue natural to the user. The smartphone 10 can select a system speech based on the user's preference to the dialogue and the information acquired in the dialogue. Accordingly, the smartphone 10 can provide an interface approachable and easy to use for the user.

### [b] Second Embodiment

While an embodiment of the present invention has been described above, the present invention can be carried out with various different modes other than the above embodiment.

### Dialogue function

In the embodiment described above, dialogue functions such as a weather, a definition, greetings have been exemplified. However, the dialogue functions are not limited thereto, and various known dialogue applications can be adopted. The number of dialogue functions to be performed by the smartphone 10 can be set arbitrarily. Further, as the calculation method of the evaluation value, an arbitrary method such as a point-addition scoring system or a point-deduction scoring system can be adopted.

### Evaluation method

In the embodiment described above, an evaluation value is calculated by respectively using the dialogue continuity, dialogue repeatability, and dialogue controllability. However, the evaluation method is not limited thereto, and an arbitrary combination can be adopted. For example, it is also possible to use either one of these elements, or to use any two of them.

### Encoding, element, user model

In the embodiment described above, an example in which a user speech is classified to words and encoded like "U1_weather" has been described. However, the encoding method is only an example, and can be changed arbitrarily. For example, a common rule or specification can be decided between the encoded information and the model stored in the user model DB 16, and an arbitrary method can be adopted.

Further, a generation method of elements combining encoded information can be changed arbitrarily. For example, only a combination of words in a user speech and words in a system speech can be extracted as the elements. When encoding the words, a vocabulary list on which meaningful words are registered is held in advance, and encoding can be performed by narrowing down words to the words described in the vocabulary list. While an example in which past two speech histories are adopted at the time of learning has been described, the number of histories can be arbitrarily set, such as past four speech histories.

### System

The respective constituent elements of the respective devices illustrated in FIG. 2 do not always have to be configured physically as illustrated in the drawing. That is, these elements can be distributed or integrated in an arbitrary unit. For example, the learning unit 25 and the speech selection unit 35 can be integrated with each other. Further, an arbitrary part or all of the respective processing functions executed by the respective devices can be realized by a CPU (Central Processing Unit) and a program that is analyzed and executed by the CPU, or can be realized as hardware with a wired logic.

Among the respective processes described in the present embodiment, a part or all of the processes explained as being performed automatically can be performed manually, or a part or all of the processes explained as being performed manually can be performed automatically with a known method. In addition, information including process procedures, control procedures, specific names, and various kinds of data and parameters described in the present specification and the drawings can be arbitrarily changed unless otherwise specified.

### Hardware

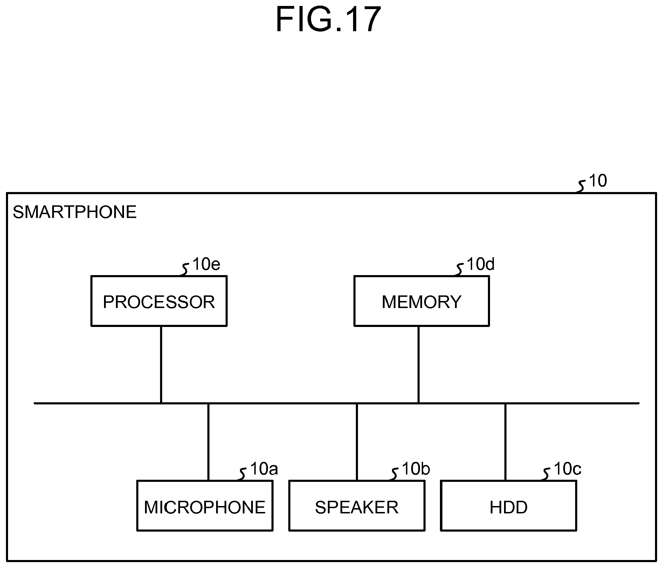

The smartphone 10 described above can be realized by, for example, a computer having the following hardware configuration. FIG. 17 is an explanatory diagram of a hardware configuration example. As illustrated in FIG. 17, the smartphone 10 includes a microphone 10a, a speaker 10b, an HDD (Hard Disk Drive) 10c, a memory 10d, and a processor 10e. Other than those elements, the smartphone 10 can include elements such as a network interface card and a wireless interface.

The microphone 10a is an example of a sound collecting unit that collects speeches made by a user and the like. The speaker 10b is an example of an output unit that outputs a speech or the like. The HDD 10c is an example of a storage device that stores therein programs and data.

As an example of the memory 10d, a RAM (Random Access Memory) such as an SDRAM (Synchronous Dynamic Random Access Memory), a ROM (Read Only Memory), and a flash memory can be mentioned. As an example of the processor 10e, a CPU (Central Processing Unit), a DSP (Digital Signal Processor), an FPGA (Field Programmable Gate Array), and a PLD (Programmable Logic Device) can be mentioned.

The smartphone 10 operates as an information processing device that executes the dialogue processing method by reading and executing a program. That is, the smartphone 10 executes programs for executing functions identical to those of the speech recording unit 21, the learning unit 25, the candidate acquisition unit 30, and the speech selection unit 35. As a result, the smartphone 10 can perform processes to execute functions identical to those of the speech recording unit 21, the learning unit 25, the candidate acquisition unit 30, and the speech selection unit 35. The program referred to in other embodiments is not limited to be executed by the smartphone 10. For example, even when other computers or servers execute the program, or when these devices cooperate to execute the program, the present invention can be similarly applied.

This program can be distributed via a network such as the Internet. Further, this program can be executed by recording it in a computer-readable recording medium such as a hard disk, a flexible disk (FD), a CD-ROM, an MO (Magneto-optical disk), and a DVD (Digital Versatile Disk) and reading it from the recording medium by a computer.

According to the embodiment, it is possible to have a natural dialogue.

## Claims

1. A dialogue processing program that causes a computer to execute a process comprising:
storing therein a plurality of certainty factors corresponding to a combination of words included in a speech and words included in a response speech responded to the speech;
detecting a user speech indicating a speech of a user;
acquiring a plurality of response candidates corresponding to the user response speech indicating the response speech with respect to the user speech from a plurality of different dialogue functions;
extracting the plurality of combinations of the words included in the user speech and the words included in the plurality of response candidates; and
selecting and outputting the user response speech from the response candidates based on the certainty factors associated with the extracted combinations.

2. The dialogue processing program according to claim 1, wherein the acquiring includes acquiring the response candidates from a first dialogue function of responding the user response speech related to greetings with respect to the user speech, a second dialogue function of responding the user response speech related to a conversation assumed to be established with respect to the user speech, a third dialogue function of responding the user response speech related to a definition with respect to the user speech, and a fourth dialogue function of responding the user response speech related to a weather forecast of a present location of the user with respect to the user speech.

3. The dialogue processing program according to claim 1, wherein the outputting includes evaluating the response candidates by using the certainty factor associated with the combinations, and selecting and outputting the user response speech from the response candidates based on an evaluation result.

4. The dialogue processing program according to claim 2, wherein the outputting includes calculating a total value obtained by summing up the certainty factors corresponding to the combinations extracted between the response candidates and the user speech, regarding the response candidates, and selecting and outputting the response candidate having the calculated highest total value as the user response speech.

5. The dialogue processing program according to any one of claims 1 to 3, wherein
the process further comprises:
storing therein a dialogue history including the user speech and the user response speech;
calculating an evaluation value based on whether the user speech includes a word expressing an end of a dialogue;
extracting the combination based on the user speech and the user response speech included in the dialogue; and
updating the certainty factors associated with the extracted combination by using the evaluation value.

6. The dialogue processing program according to any one of claims 1 to 3, wherein
the process further comprises:
storing therein a dialogue history including the user speech and the user response speech;
calculating an evaluation value based on a similarity between the user speech and the user speech one before;
extracting the combination based on the user speech and the user response speech included in the dialogue; and
updating the certainty factors associated with the extracted combination by using the evaluation value.

7. The dialogue processing program according to any one of claims 1 to 3, wherein
the process further comprises:
storing therein a dialogue history including the user speech and the user response speech;
calculating an evaluation value based on whether a word forcibly controlling a dialogue is included in the user speech;
extracting the combination based on the user speech and the user response speech included in the dialogue; and
updating the certainty factors associated with the extracted combination by using the evaluation value.

8. A dialogue processing method comprising:
storing therein a plurality of certainty factors corresponding to a combination of words included in a speech and words included in a response speech responded to the speech;
detecting a user speech indicating a speech of a user;
acquiring a plurality of response candidates corresponding to the user response speech indicating the response speech with respect to the user speech from a plurality of different dialogue functions;
extracting the plurality of combinations of the words included in the user speech and the words included in the plurality of response candidates; and
selecting and outputting the user response speech from the response candidates based on the certainty factors associated with the extracted combinations.

9. An information processing device (10) comprising:
a memory configured to store therein a plurality of certainty factors corresponding to a combination of words included in a speech and words included in a response speech responded to the speech;
a processor coupled to the memory and the processor configured to:
detect a user speech indicating a speech of a user;
acquire a plurality of response candidates corresponding to the user response speech indicating the response speech with respect to the user speech from a plurality of different dialogue functions;
extract the plurality of combinations of the words included in the user speech and the words included in the plurality of response candidates; and
select and output the user response speech from the response candidates based on the certainty factors associated with the extracted combinations.
